# EUROPÄISCHE PATENTANMELDUNG

(11) **EP 3 045 604 A1**
(43) Veröffentlichungstag der Anmeldung: **20.07.2016**
(21) Anmeldenummer: 16150367.7
(22) Anmeldetag: 07.01.2016
(51) Int. Cl.: E04B 5/02, E04B 5/23, E04B 5/48

(54) **VERBUNDFERTIGTEIL**

(30) Priorität: 16.01.2015 AT 192015
(71) Anmelder: MMK Holz-Beton-Fertigteile GmbH, 2752 Wöllersdorf (AT)
(72) Erfinder: Barnas, Alexander, 1030 Wien (AT); Lierzer, Thomas, 8641 St. Marein (AT)
(74) Vertreter: Gibler & Poth Patentanwälte KG

(57) **Zusammenfassung**

Bei einem Verbundfertigteil (1), umfassend eine Zugschicht (2) und eine, mit der Zugschicht (2) verbundene Betonschicht (3), wird vorgeschlagen, dass die Zugschicht (2) an einer, der Betonschicht (3) zugewandten, Zugschichtinnenseite (4) eine vorgebbare Mehrzahl vorgebbar geformter Vertiefungen (5) aufweist, in welche Vertiefungen (5) die Betonschicht (3) zur Bildung eines formschlüssigen Verbundes zwischen Betonschicht (3) und Zugschicht (2) eingreift.

## Beschreibung

Es ist bekannt Gebäudedecken in Holz-Beton-Verbundbauweise auszubilden. Dabei wird auf eine Holzdecke eine zusätzliche Betondecke aufgebracht. Derartige Verbunddecken sind etwa bei Gebäudesanierungen bzw. Ausbauten, wie etwa Dachbodenausbauten, üblich, und werden im Rahmen der Leichtbauweise auch bei Neubauten eingesetzt. Die Betonschicht übernimmt bei derartigen Verbunddecken die Druckspannungen, während die Holzschicht die Zugspannungen aufnimmt. Durch die zusätzliche Masse der Betonschicht, verbunden mit der hohen inneren Dämpfung von Beton, weisen derartige Verbunddecken neben dem geringen Gewicht sehr gute bauakustische Eigenschaften auf.

Die Verbindung zwischen der Betonschicht und der Holzschicht erfolgt durch Formschluss über Vorsprünge bzw. Ausnehmungen an der Holzschicht bzw. einer bereits bestehenden Holzdecke. Diese Vorsprünge bzw. Ausnehmungen können dabei durch Verbindungsmittel gebildet sein, welche in die Holzschicht getrieben werden, oder aber aus Nuten bzw. Aussparungen an der Holzschicht, welche branchenüblich als Kerven bezeichnet werden, und welche in die Holzschicht vor Ort eingefräst werden. Die Betonschicht wird unmittelbar auf der Baustelle auf die, bereits bestehende bzw. zuvor angefertigte, Holzschicht gegossen.

Die bauphysikalischen Vorteile derartiger Verbunddecken, wie insbesondere hohe Tragfähigkeit bei geringem Gewicht verbunden mit guter Körperschalldämmung, gehen einher mit dem Nachteil, dass derartige Verbunddecken aufwendig zu fertigen sind. Die Herstellung bzw. das Setzen von Verbindungsmittel ist aufwendig, zeitintensiv und mit einer hohen Lärmbelastung für die Arbeiter bzw. Anrainer verbunden. Zudem ist hiebei der Einsatz großer Mengen Kunstharzkleber zur Fixierung der Verbindungsmittel nicht unüblich. Das Herstellen der Betonschicht auf der Baustelle, erfordert umfangreiche und sorgfältige Abdichtmaßnahmen, um ein Eindringen des noch flüssigen Betons in darunter liegende Räumlichkeiten zu verhindern. Die Betonschicht muss zudem, zumindest bis zu den Trennfugen bzw. Dehnungsfugen in einem Guss gefertigt werden, wobei die betreffende Arbeit schwer ist und viel Schmutz auf der Baustelle verursacht. Nach Fertigstellung der Betonschicht ist diese nicht sofort voll belastbar, sondern muss erst vollständig aushärten. Während dieser Zeit kann auf der neu hergestellten Decke nicht weitergearbeitet werden, wodurch der Baufortschritt gebremst und die Kosten erhöht werden. Außerdem muss häufig bei der frischen Betonschicht die Holzdecke zusätzlich abgestützt werden muss, damit diese die nasse und noch nicht druckaufnahmefähige Betonschicht tragen kann, wodurch der Aufwand weiter erhöht wird.

Aufgabe der Erfindung ist es daher einen Verbundfertigteil der eingangs genannten Art anzugeben, mit welchem die genannten Nachteile vermieden werden können, mit welchem der Bau eines Gebäudes vereinfacht und beschleunigt werden kann, und mit welchem innerhalb kurzer Zeit eine belastbare Geschossdecke gebildet werden kann.

Erfindungsgemäß wird dies durch die Merkmale des Patentanspruches 1 erreicht.

Dadurch kann eine Verbunddecke in Trockenbauweise hergestellt werden. Dadurch kann auf das Herstellen einer gegossenen Betonschicht als Teil der tragenden Verbunddecke verzichtet werden, wodurch die Logistik auf der Baustelle deutlich vereinfacht wird. Dadurch kann eine Verbundecke geschaffen werden, welche gegenüber herkömmlichen Verbundecken höher belastbar ist und gleichzeitig eine geringere Masse aufweist. Gegenständliche Verbundfertigteile können in einem Werk bzw. einer Fabrik hergestellt werden, und müssen nicht auf einer Baustelle bzw. unter Baustellenbedingungen hergestellt werden. Dabei kann qualitativ hochwertigerer Beton verarbeitet werden, als dies bei Lieferbeton oder bei Ortbeton der Fall wäre. Zudem können in dem Werk die Aushärtbedingungen besser kontrolliert werden. Die einzelnen Verbundfertigteile werden auf der Baustelle mit bekannten Holzverbindungstechniken miteinander bzw. einer Holzunterkonstruktion verbunden. Da kein Aushärten des Betons abgewartet werden muss, sind die verlegten und fixierten Verbundfertigteile sofort voll belastbar. Es entfällt daher das Warten auf die Begehbarkeit der Betonschicht oder die Notwendigkeit einer zusätzlichen Stützung der Holzdecke während des Aushärtens, wodurch der Baufortschritt beschleunigt und die Kosten, sowie der logistische Aufwand auf der Baustelle, reduziert werden kann. Da keine Verbindungsmittel gesetzt werden müssen, kann auch diese Prozedur entfallen, welche für allfällige Bewohner, etwa im Rahmen eines nachträglichen Dachbodenausbaus, eine erhebliche Belastung darstellt. Ein weiterer Vorteil besteht darin, dass eine derartige Geschossdecke durch deren Festigkeit direkt und ohne eine übliche Holzauflagekonstruktion auf eine Wand aus Ziegel oder Beton aufgesetzt werden kann, wodurch eine Holzdecke einfach auch in einem Ziegel- oder Betongebäude eingesetzt werden kann.

Die Unteransprüche betreffen weitere vorteilhafte Ausgestaltungen der Erfindung.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 eine axonometrische Darstellung einer bevorzugten Ausführung eines gegenständlichen Verbundfertigteils;
Fig. 2 einen Längsschnitt durch einen Verbundfertigteil gemäß Fig. 1, mit strichliert dargestellten Teilen einer Deckenkonstruktion; und
Fig. 3 eine Geschossdecke mit Verbundfertigteilen gemäß Fig. 1 im Querschnitt.

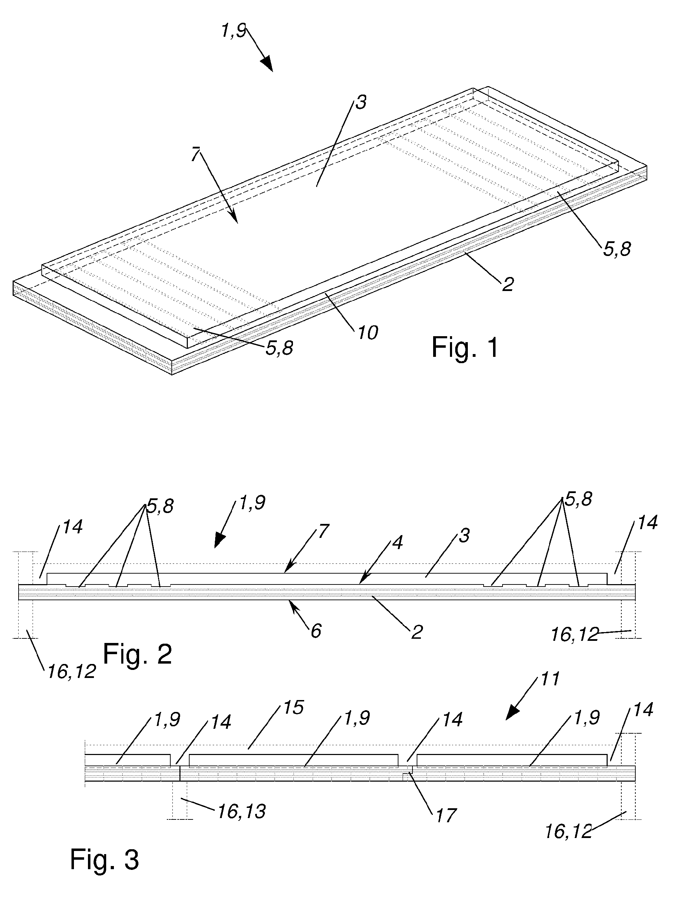

Die Fig. 1 und 2 zeigen Verbundfertigteit 1, umfassend eine Zugschicht 2 und eine, mit der Zugschicht 2 verbundene Betonschicht 3, wobei die Zugschicht 2 an einer, der Betonschicht 3 zugewandten, Zugschichtinnenseite 4 eine vorgebbare Mehrzahl vorgebbar geformter Vertiefungen 5 aufweist, in welche Vertiefungen 5 die Betonschicht 3 zur Bildung eines formschlüssigen Verbundes zwischen Betonschicht 3 und Zugschicht 2 eingreift.

Dadurch kann eine Verbunddecke bzw. Geschossdecke 11 in Trockenbauweise hergestellt werden. Dadurch kann auf das Herstellen einer gegossenen Betonschicht als Teil der tragenden Verbunddecke verzichtet werden, wodurch die Logistik auf der Baustelle deutlich vereinfacht wird. Dadurch kann eine Verbundecke geschaffen werden, welche gegenüber herkömmlichen Verbundecken höher belastbar ist und gleichzeitig eine geringere Masse aufweist. Gegenständliche Verbundfertigteile 1 können in einem Werk bzw. einer Fabrik hergestellt werden, und müssen nicht auf einer Baustelle bzw. unter Baustellenbedingungen hergestellt werden. Dabei kann qualitativ hochwertigerer Beton verarbeitet werden, als dies bei Lieferbeton oder bei Ortbeton der Fall wäre. Zudem können in dem Werk die Aushärtbedingungen besser kontrolliert werden. Die einzelnen Verbundfertigteile 1 werden auf der Baustelle mit bekannten Holzverbindungstechniken miteinander bzw. einer Holzunterkonstruktion verbunden. Da kein Aushärten des Betons abgewartet werden muss, sind die verlegten und fixierten Verbundfertigteile 1 sofort voll belastbar. Es entfällt daher das Warten auf die Begehbarkeit bzw. volle Belastbarkeit der Betonschicht oder die Notwendigkeit einer zusätzlichen Stützung der Holzdecke während des Aushärtens, wodurch der Baufortschritt beschleunigt und die Kosten, sowie der logistische Aufwand auf der Baustelle, reduziert werden kann. Da keine Verbindungsmittel, beispielsweise Metallanker, gesetzt werden müssen, kann auch diese Prozedur entfallen, welche für allfällige Bewohner, etwa im Rahmen eines nachträglichen Dachbodenausbaus, eine erhebliche Belastung darstellt. Ein weiterer Vorteil besteht darin, dass eine derartige Geschossdecke 11 durch deren Festigkeit direkt und ohne eine übliche Holzauflagekonstruktion auf eine Wand aus Ziegel oder Beton aufgesetzt werden kann, wodurch eine Holzdecke einfach auch in einem Ziegel- oder Betongebäude eingesetzt werden kann.

Ein gegenständlicher Verbundfertigteil 1 weist eine Zugschicht 2 und eine Druckschicht auf. Bevorzugt ist vorgesehen, dass der Verbundfertigteil 1 lediglich eine Zugschicht 2 und eine Druckschicht aufweist.

Die Druckschicht ist dabei als Betonschicht 3 ausgebildet. Ein derartiger Verbundfertigteil 1 weist daher bevorzugt eine definierte Einsatzlage auf, ja nach Belastungsrichtung. Beim bevorzugten Einsatz des gegenständlichen Verbundfertigteils 1 als Verbunddeckenplatte 9 ist die Betonschicht 3 oben anzuordnen.

Die Betonschicht 3 ist bevorzugt bewehrungsfrei ausgebildet. Dadurch kann der Herstellungsaufwand gering gehalten werden, wie auch die Kosten.

Die Betonschicht 3 umfasst besonders bevorzugt einen schwindreduzierten Beton, insbesondere einen Beton mit Schwindmaßen von kleiner 0,04%, bevorzugt 0,03%, besonders bevorzugt 0,02%. Durch derart geringe Schwindmaße können die Deckendurchbiegungen verringert und damit die zulässigen Spannweiten der Geschossdecken 11 bei gleichbleibender Gesamtstärke erhöht werden.

Die Zugschicht 2 kann umfassend unterschiedliche Materialien bzw. Werkstoffe ausgebildet sein. Besonders bevorzugt ist vorgesehen, dass die Zugschicht 2 als Holzschicht, vorzugsweise als Brettsperrholzplatte, ausgebildet ist. Dadurch kann ein geringes Gewicht verbunden mit einer hohen Belastbarkeit erzielt werden. Weiters kann dadurch eine besonders einfache Verarbeitung auf der Baustelle ermöglich werden, indem herkömmliche Holzverbinder, etwa Schrauben, Nägel und Knotenbleche verwendet werden. Zudem ist Holz als nachwachsender Rohstoff ausreichend verfügbar. Alternativ kann, etwa für bestimmte Spezialanwendungen, die Zugschicht umfassend faserverstärktem Kunststoff und/oder Metall ausgebildet sein. Es kann auch vorgesehen sein, dass die Zugschicht 2 als Verbund als Holz und Metall bzw. Holz und faserverstärktem Kunststoff ausgebildet ist. Dies erhöht die Belastbarkeit des Verbundfertigteils 1, verursacht jedoch zusätzlichen Aufwand bei der Verarbeitung auf der Baustelle.

Die Betonschicht 3 ist mit der Zugschicht 2 formschlüssig verbunden. Dabei ist vorgesehen, dass die Zugschicht 2 an einer, der Betonschicht 3 zugewandten, Zugschichtinnenseite 4 eine vorgebbare Mehrzahl vorgebbar geformter Vertiefungen 5 bzw. Ausnehmungen aufweist. Die Vertiefungen 5, welche auch als Kerven bezeichnet werden können, sind bevorzugt als Sacklöcher und/oder Nuten 8 ausgebildet. Die Vertiefungen 5 erstrecken sich dabei nicht durch die gesamte Zugschicht 2, wie insbesondere in Fig. 2 dargestellt, und sind folglich nicht als Durchgangsöffnung ausgebildet.

Die Betonschicht 3 greift zur Bildung eines formschlüssigen Verbundes zwischen Betonschicht 3 und Zugschicht 2 in die Vertiefungen 5 der Zugschicht 2 ein. Dies erfolgt im Zuge der Herstellung des Verbundfertigteils 1, wobei flüssiger Beton auf die Zugschicht 2 gegossen wird. Es ist daher auch möglich, dass die Vertiefungen 5 wenigstens eine Hinterschneidung aufweisen.

Besonders bevorzugt ist vorgesehen, dass die Betonschicht 3 zur Bildung des formschlüssigen Verbundes zwischen Betonschicht 3 und Zugschicht 2 lediglich in die Vertiefungen 5 der Zugschicht 2 eingreift, und dass folglich keine zusätzlichen Verbindungsmittel in diesem Bereich vorgesehen sind, also keine zusätzlichen Metallanker, welche vor der Herstellung der Betonschicht 3 in der Zugschicht 2 angeordnet werden.

Bevorzugt sind die Betonschicht 3, wie auch die Zugschicht 2 als durchgehende Schichten ausgebildet. Davon ausgenommen sind lediglich Durchbrechungen, welche der Durchführungen einer Versorgungsleitung, etwa ein Deckenausgang zum Anschluss eines Beleuchtungskörpers, dienen.

Die Zugschicht 2 bildet bei den bevorzugten Ausführungen des gegenständlichen Verbundfertigteils 1 eine erste Verbundfertigteilaußenseite 6. Eine zweite Verbundfertigteilaußenseite 7 bildet gemäß besagter bevorzugter Ausführungsform im Wesentlichen die Betonschicht 3. Die Zugschicht 2 wird daher bevorzugt nicht von der Betonschicht 3 umgriffen bzw. ist auch nicht in diese eingebettet.

Bevorzugt ist vorgesehen, dass die Zugschicht 2 die Betonschicht 3 wenigstens an einer ersten Verbundfertigteilseitenkante 10 überragt. Dadurch ist die Zugschicht 2 von beiden Verbundfertigteilaußenseiten 6, 7 her zugänglich um an dieser Holzverbindungsmittel anbringen zu können. Dies vereinfacht die Verarbeitung der Verbundfertigteile 1 auf der Baustelle. Zudem wird dadurch bei der Herstellung einer Geschoßdecke 11 ein Kanal 14 zwischen aneinander angrenzenden Verbundfertigteilen 1 bzw. am Rand eines Verbundfertigteils 1 geschaffen, in welchen Kanal 14 wenigstens eine Leitung, insbesondere eine Stromleitung und/oder eine Fluidleitung, etwa eine Frischwasserleitung, Abwasserleitung, Gasleitung, und/oder ein Heizungsrohr, verlegt werden kann. Dadurch kann auf das nachträgliche Schaffen derartiger Kanäle 14 verzichtet werden.

Besonders bevorzugt ist vorgesehen, dass die Zugschicht 2 die Betonschicht 3 allseitig seitlich überragt. Dadurch wird die Verarbeitung noch weiter vereinfacht. Zudem entsteht dadurch bei der Bildung einer Geschoßdecke 11 ein Raster aus Kanälen 14, welcher die Verlegung von Leitungen noch weiter vereinfacht. Weiters ergibt sich der Vorteil, dass es einfach möglich ist die Zugschichten 2 angrenzender Verbundfertigteile 1 allseitig miteinander zu verbinden, wodurch mehrere miteinander verbundene Verbundfertigteile 1 horizontale Zugkräfte einfach weitergleiten können und dadurch einen besonders starken Verbund ausbilden können. Dadurch kann auf einen zusätzlichen Rost verzichtet werden, welcher über mehrere Verbundfertigteile 1 die Zugkräfte überträgt.

Besonders bevorzugt kann vorgesehen sein, dass in der Betonschicht 3 eine Leerverrohrung angeordnet ist. Die Leerverrohrung kann hierbei einfach vor dem Guss der Betonschicht 3 angeordnet, und derart einfach in der Betonschicht 3 angeordnet werden. Durch die Leerverrohrung wird die Verlegung von Leitungen, beispielsweise zu einem zentral angeordneten Beleuchtungskörper, weiter vereinfacht. Die Leerverrohrung kann insbesondere zusätzlich zu dem Raster an Kanälen 14 ausgebildet sein.

Es kann vorgesehen sein, dass der Verbundfertigteil 1 unterschiedliche geometrische Ausformungen aufweist. Gemäß einer bevorzugten Ausführungsform ist der Verbundfertigteil 1 als Verbundplatte, insbesondere als Verbunddeckenplatte 9, ausgebildet. Dabei ist insbesondere vorgesehen, dass die Verbunddeckenplatte 9 eine im Wesentlichen ebene Platte ist. Es kann vorgesehen sein, etwa zur Bildung hoch belastbarer Geschoßdecken, dass die Verbunddeckenplatte 9 innerlich vorgespannt ist und/oder - im unbelasteten Zustand - durchgebogen ist.

Die Fig. 1 bis 3 zeigen eine besonders bevorzugte Ausführungsform eines gegenständlichen Verbundfertigteils 1 in Form einer im Wesentlichen ebenen Platte. Entsprechend der bevorzugten Ausführungsform weist der Verbundfertigteil 1 eine im Wesentlichen rechteckige Grundfläche auf, wobei die Grundfläche der Zugschicht 2 größer ist als die Grundfläche der Betonschicht 3. Insbesondere ist dabei sowohl die Länge als auch die Breite der Zugschicht 2 größer als die Länge bzw. die Breite der Betonschicht 3. Wie in Fig. 1 dargestellt, ist allseitig um die Betonschicht 3 herum ein Rücksprung gegenüber der Zugschicht 2 ausgebildet. Die Seitenränder bzw. Seitenkanten der Betonschicht 3 weisen daher über deren gesamten Verlauf jeweils einen Abstand zu den Seitenrändern bzw. Seitenkanten der Zugschicht 2 auf. Durch diesen Rücksprung kann weiters besonders einfach ein Raster an Kanälen 14 sowohl in Längs- als auch in Querrichtung erzeugt werden.

Die Betonschicht 3 ist lediglich an einer Fläche an der Zugschicht 2 angebracht. Sowohl die, als Brettsperrholzschicht ausgebildete, Zugschicht 2 als auch die Betonschicht 3 weisen im Wesentlichen überall eine gleiche Dicke auf. Wie insbesondere in Fig. 2 erkennbar, weist die Zugschicht 2, bei gegenständlicher bevorzugter Ausführung, sechs Vertiefungen 5 auf, welche branchenüblich als Kerven bezeichnet werden. Es können auch eine höhere bzw. geringere Anzahl an Vertiefungen 5 an der Zugschicht 2 angeordnet sein. Die Vertiefungen 5 sind dabei als Nuten 8 mit im Wesentlichen rechteckiger Grundfläche ausgebildet, welche an der Zugschicht 2 lediglich eine, gegenüber der Dicke der Zugschicht 2, geringe Eindringtiefe aufweisen. Es sei darauf hingewiesen, dass die betreffenden Vertiefungen 5 in Fig. 1 lediglich als unsichtbare Kanten dargestellt sind, sowie dass Fig. 2 und 3 eine Schnittdarstellung darstellt, wobei aus Gründer der besseren Übersicht auf die gemeinhin üblichen Schraffierungen verzichtet wurde.

Wie bereits dargelegt, ist besonders bevorzugt vorgesehen, dass der Verbundfertigteil 1 als Verbunddeckenplatte 9 bzw. Verbundfertigteildeckenplatte ausgebildet ist. Es ist folglich vorgesehen, aus derartigen Verbunddeckenplatten 9 eine Geschossdecke 11, insbesondere eine Gebäudedecke und/oder eine Raumdecke, zu bilden. Dabei ist eine Geschossdecke 11, insbesondere Gebäudedecke und/oder Raumdecke, umfassend Verbundfertigteile 1 vorgesehen.

Die Geschossdecke 11 kann insbesondere von Auflagern 16 getragen werden. Die Auflager 16 können insbesondere als Wände ausgebildet sein, beispielsweise Seitenwände 12 oder Innenwände 13, oder auch als freistehende Stützen, beispielsweise bei größeren Räumen.

Insbesondere kann vorgesehen sein, dass die Auflager 16 Wände aus Beton und/oder Ziegel umfassen. Hierbei hat sich gezeigt, dass eine direkte Auflage der Geschossdecke 11 auf eine gemauerte oder betonierte Wand einfach zu verlegen ist, wodurch eine Holzdecke einfach auch in einem Ziegel- oder Betongebäude eingesetzt werden kann.

Hierbei kann insbesondere vorgesehen sein, dass ein Verbundfertigteil 1 auf zwei gegenüberliegenden Auflagern 16 aufliegt, wie dies in Fig. 2 dargestellt ist. Hierbei können die Verbundfertigteile 1 insbesondere eine Länge aufweisen, welche zumindest einem Abstand zwischen zwei gegenüberliegenden Wänden eines Gebäudes entspricht. Dadurch kann besonders einfach eine stabile Geschossdecke 11 erzeugt werden.

Insbesondere kann bevorzugt vorgesehen sein, dass die Zugschicht 2 an wenigstens einer Verbundfertigteilseitenkante einen Absatz 17 aufweist, und an einer dieser gegenüber liegenden Verbundfertigteilseitenkante einen entsprechend gegengleichen Absatz 17, wobei beide Absätze 17 zu einer Stufenfalz zusammengeführt werden können. Durch diese Stufenfalz kann der Schalldurchgang durch die Geschossdecke 11 reduziert werden, weshalb diese Art der Verbindung besonders für einen freitragenden Bereich der Geschossdecke 11 geeignet ist. Weiters kann bei der Bildung einer Geschossdecke 11 ein noch besserer Verbund zwischen den einzelnen Verbundfertigteilen 1 erzielt wird, und das Verlegen der Verbundfertigteile 1 noch weiter vereinfacht wird.

Weiters kann vorgesehen sein, dass die Zugschicht 2 an wenigstens einer Verbundfertigteilseitenkante eben ausgebildet ist. Diese Verbundfertigteilseitenkante kann insbesondere an einem Rand der Geschossdecke 11 und/oder über einer Innenwand 13 angeordnet sein, da hierbei der Schalldurchgang durch die Geschossdecke 11 bereits durch die Wand verhindert wird.

Die einzelnen Verbundfertigteile 1 sind bevorzugt mittels Holzverbindungsmitteln, insbesondere umfassend Nägel, Schrauben, Knotenbleche, miteinander verbunden. Dadurch kann sehr schnell eine begehbare Geschossdecke 11 gebildet werden, wobei keine Betonierarbeiten vor Ort ausgeführt werden müssen. Eine derartige Geschossdecke 11 kann durch Zimmermänner gefertigt werden, wodurch keine Maurer in diesem Bauabschnitt gebraucht werden. Dadurch kann ein Gewerke auf der Baustelle eingespart werden. Da auf die Koordination zwischen unterschiedlichen Gewerken bzw. Unternehmen verzichtet werden kann, wird der Baufortschritt weiter beschleunigt.

Wie in Fig. 2 und 3 dargestellt, wird an den Rändern der Verbundfertigteile 1, insbesondere zwischen den aneinander angrenzenden Verbundfertigteilen 1, ein Kanal 14 bzw. Leitungskanal ausgebildet. Dabei ist bevorzugt vorgesehen, bei gegenständlicher Geschossdecke 11, nicht dargestellte, Leitungen, insbesondere eine Stromleitung und/oder eine Fluidleitung, wie etwa eine Frischwasserleitung, Abwasserleitung, Gasleitung und/oder ein Heizungsrohr, in dem Kanal 14 anzuordnen. Bei der bevorzugten Ausbildung des Verbundfertigteils 1 entsprechend den Fig. 1 bis 3 entsteht bei der Bildung der Geschossdecke 11 ein Raster an sowohl längs als auch quer verlaufenden Kanälen 14, wodurch die Leitungsführung sehr flexibel gestaltet werden kann. Die Kanäle 14 können insbesondere auch entlang der Wand verlaufen.

Die Kanäle 14 werden mit herkömmlicher Beschüttung bzw. Schüttung verfüllt, wodurch nicht nur allfällige Leitungen zugedeckt werden, sondern insbesondere auch in diesem Bereich Druckkräfte auf die darunter liegende Zugschicht 2 übertragen werden können, und zudem auch Druckkräfte zwischen benachbarten Betonschichten 3 übertragen werden.

Auf der Betonschicht 3 ist weiters ein Estrich 15, welcher in den Fig. 2 und 3 lediglich schematisch durch strichlierte Lienen dargestellt ist, angeordnet. Insbesondere ist dabei vorgesehen, dass der Estrich 15 als Trockenestrich ausgebildet ist, wodurch der Baufortschritt noch weiter beschleunigt werden kann, und der gesamte Deckenaufbau durch Zimmermänner bzw. Trockenbauer erfolgen kann, ohne der Notwendigkeit von Maurerarbeiten.

Bevorzugt kann die Zugschicht 2 an der ersten Verbundfertigteilaußenseite 6 eine Holzuntersicht aufweisen. Die Zugschicht 2 kann daher an der ersten Verbundfertigteilaußenseite 6 wie die Unterseite der fertigen Geschossdecke 11 ausgebildet sein, wodurch weitere arbeiten an der Unterseite nicht notwendig sind.

Besonders bevorzugt kann vorgesehen sein, dass die Zugschicht 2 eine Unterseite der Geschossdecke 11 ausbildet. Insbesondere bildet hierbei eine erste Verbundfertigteilaußenseite 6 die Unterseite der Geschossdecke 11. Der Verbundfertigteit 1, insbesondere die Zugschicht 2, kann daher derart ausgebildet sein, dass die Zugschicht 2 bereits eine voll gebrauchsfähige erste Verbundfertigteilaußenseite 6 aufweist, wodurch weitere Arbeiten an der Unterseite der Geschossdecke 11 nicht notwendig sind, wodurch die Zeit und der Aufwand zur Herstellung der Geschossdecke 11 weiter reduziert werden kann.

## Patentansprüche

1. Verbundfertigteil (1), umfassend eine Zugschicht (2) und eine, mit der Zugschicht (2) verbundene Betonschicht (3), wobei die Zugschicht (2) an einer, der Betonschicht (3) zugewandten, Zugschichtinnenseite (4) eine vorgebbare Mehrzahl vorgebbar geformter Vertiefungen (5) aufweist, in welche Vertiefungen (5) die Betonschicht (3) zur Bildung eines formschlüssigen Verbundes zwischen Betonschicht (3) und Zugschicht (2) eingreift.

2. Verbundfertigteil (1) nach Anspruch 1, **dadurch gekennzeichnet, dass** die Betonschicht (3) zur Bildung des formschlüssigen Verbundes zwischen Betonschicht (3) und Zugschicht (2) lediglich in die Vertiefungen (5) der Zugschicht (2) eingreift.

3. Verbundfertigteil (1) nach Anspruch 1 oder 2, **dadurch gekennzeichnet, dass** die Zugschicht (2) eine erste Verbundfertigteilaußenseite (6) bildet.

4. Verbundfertigteil (1) nach Anspruch 3, **dadurch gekennzeichnet, dass** eine zweite Verbundfertigteilaußenseite (7) im Wesentlichen durch die Betonschicht (3) bildet ist.

5. Verbundfertigteil (1) nach einem der Ansprüche 1 bis 4, **dadurch gekennzeichnet, dass** die Vertiefungen (5) als Sacklöcher und/oder Nuten (8) ausgebildet sind.

6. Verbundfertigteil (1) nach einem der Ansprüche 1 bis 5, **dadurch gekennzeichnet, dass** die Zugschicht (2) als Holzschicht, vorzugsweise als Brettsperrholzplatte, ausgebildet ist.

7. Verbundfertigteil (1) nach einem der Ansprüche 1 bis 6, **dadurch gekennzeichnet, dass** der Verbundfertigteil (1) als Verbundplatte, insbesondere als Verbunddeckenplatte (9), ausgebildet ist.

8. Verbundfertigteil (1) nach einem der Ansprüche 1 bis 7, **dadurch gekennzeichnet, dass** die Zugschicht (2) die Betonschicht (3) wenigstens an einer ersten Verbundfertigteilseitenkante (10) überragt.

9. Verbundfertigteil (1) nach einem der Ansprüche 1 bis 8, **dadurch gekennzeichnet, dass** die Betonschicht (3) bewehrungsfrei ausgebildet ist.

10. Geschossdecke (11), insbesondere Gebäudedecke und/oder Raumdecke, umfassend Verbundfertigteile (1) nach einem der Ansprüche 1 bis 9.

11. Geschossdecke (11) nach Anspruch 10, **dadurch gekennzeichnet, dass** die Verbundfertigteile (1) mittels Holzverbindungsmitteln, insbesondere umfassend Nägel, Schrauben, Knotenbleche, miteinander verbunden sind.

12. Geschossdecke (11) nach Anspruch 10 oder 11, **dadurch gekennzeichnet, dass** die Verbundfertigteile (1) nach Anspruch 8 ausgebildet sind, wobei an Rändern der Verbundfertigteile (1), insbesondere zwischen aneinander angrenzenden Verbundfertigteilen (1), ein Kanal (14) ausgebildet ist, und dass in dem Kanal (14) wenigstens eine Leitung, insbesondere eine Stromleitung und/oder eine Fluidleitung angeordnet ist.

13. Geschossdecke (11) nach einem der Ansprüche 10 bis 12, **dadurch gekennzeichnet, dass** auf der Betonschicht (3) ein Estrich (15) insbesondere ein Trockenestrich, angeordnet ist.
